# EUROPEAN PATENT SPECIFICATION

(11) **EP 4 065 767 B1**
(45) Date of publication and mention of the grant of the patent: **13.12.2023**
(21) Application number: 20811017.1
(22) Date of filing: 28.10.2020
(51) Int. Cl.: D21H 17/21, C08L 5/14, C08L 25/00, C09D 105/14, C09D 125/04, C09D 133/00, D21H 17/24, D21H 17/34, D21H 17/00, D21H 19/20, D21H 19/34

(54) **A POLYMER DISPERSION COMPRISING HEMICELLULOSE**
WÄSSRIGE DISPERSION ENTHALTEND HEMICELLULOSE
DISPERSION POLYMÉRIQUE COMPRENANT DE L'HEMICELLULOSE

(30) Priority: 27.11.2019 FI 20196021
(43) Date of publication of application: 05.10.2022
(73) Proprietor: CH-Polymers Oy, 02170 Espoo (FI)
(72) Inventor: MIETTINEN, Päivi, 02170 Espoo (FI); AHOKAS, Mia, 02170 Espoo (FI); HEINONEN, Jaana, 02170 Espoo (FI); HUHTALA, Kimmo, 02170 Espoo (FI)
(74) Representative: Hovinen, Jari Juhani
(86) International application number: PCT/FI2020/050709
(87) International publication number: WO 2021/105547

(56) References cited:
- WO-A2-2008/103123
- WO-A2-2013/053840

## Description

### FIELD

The present invention is related to polymer dispersions obtainable by free radical polymerization reaction of hemicellulose and one or more ethylenically unsaturated monomers. The invention relates also to coated paper products wherein the coating is prepared using the polymer dispersions.

### BACKGROUND

Environmental pressures to limit the use of oil-based raw-materials in all industry areas are growing, and different bio-based alternatives are today under intensive studies. Bio-based polymers have a very diverse chemistry, and architecture of their side chains provides unique possibilities to tailor the properties of the materials. They can be derived from a range of resources from proteins, polysaccharides to some biogenic polyesters including by-products and industrial waste. Although starch-derivates have been developed for decades, recently there have been discussions to restrict the use of starch as part of the food supply chain. Thus, lignocellulosic material such as hemicellulose extracted from wood-based biomass is an interesting starch alternative.

Lignocellulosic materials, such as hemicelluloses, are nontoxic and suitable for barrier applications. However, hemicelluloses are hydrophilic, and their properties are sensitive to changes in relative humidity. Therefore, they are typically mixed with other biopolymers, synthetic polymers, plasticizers and compatibilizers to enhance their properties. Also, different methods to decrease hydrophilicity of hemicelluloses have been proposed.

WO2008/103123 discloses flexible films or coatings for packaging based on hemicellulose and having an improved liquid/moisture resistance. The improved liquid/moisture resistance was achieved by mixing and/or reacting hemicellulose with cross-linking agents such as boric acid, polyamidoamine-epichlorohydrin, or ammonium zirconium carbonate or hydrophobizing agents such as alkyl keten dimer.

WO2008/145828 discloses dispersions comprising hemicellulose esters and their use as binders in coating compositions for paper and paperboard products.

EP2739782A1 discloses dispersion comprising hemicellulose fatty acid ester, and papers and paperboards coated with the dispersion. The best reported barrier properties against water vapor, WVTR, was 85 gm⁻² d⁻¹ (23 °C, relative humidity 50%). Although the value measured was as good as that of a commercial polylactic acid (PLA) coated board it is still significantly lower than for polyethylene (PE) coated boards.

Accordingly, there is still need for further hemicellulose derivatives suitable for barrier applications.

### SUMMARY

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

It was found in the present invention that properties of hemicellulose-based barrier compositions can be improved when they are prepared by free radical polymerization of hemicellulose and ethylenically unsaturated monomers. It was also observed that properties of the hemicellulose-based barrier compositions are dependent on hemicellulose structure and molecular weight range. These observations can be exploited for tuning properties of the barrier composition.

Accordingly, it is an object of the present invention to provide a polymer dispersion obtainable by free radical polymerization of 10-60% by weight hemicellulose and 40-90% by weight one or more ethylenically unsaturated monomers in the presence of at least one redox initiator, wherein the ethylenically unsaturated monomers comprise
a) 0-60% by weight at least one substituted or unsubstituted styrene,
b) 10-100% by weight at least one alkyl (meth)acrylate and/or 10-100% by weight at least one alkyl acrylate, and
c) 0-10% by weight at least one further ethylenically unsaturated co-polymerizable monomer,
wherein the sum of a) + b) + c) is 100 %, and wherein molecular weight of the hemicellulose is 5-10 kDa and wherein the hemicellulose is selected from xylans and galactoglycomannans.

It is also an object of the present invention to provide a method for coating paper product, the method comprising
i) applying the polymer dispersion according to claim 1 on the paper product, and
ii) drying the polymer dispersion.

It is also an object of the present invention to provide a coated paper product obtainable by a method comprising
i) applying the polymer dispersion according to claim 1 on the paper product, and
ii) drying the polymer dispersion.

It is also an object of the present invention to provide use of the polymer dispersion according to claim 1 as a size of a paper product or a coating of a paper product.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that dependent claims are mutually freely combinable unless otherwise explicitly stated. Furthermore, it is to be understood that the use of "a" or "an", i.e. a singular form, throughout this document does not exclude a plurality.

### DESCRIPTION

The specific examples provided in the description below should not be construed as limiting the scope and/or the applicability of the accompanied claims. Lists and groups of examples provided in the description are not exhaustive unless otherwise explicitly stated.

According to one embodiment the present invention concerns a polymer dispersion comprising hemicellulose obtainable by free radical polymerization of 10-60% by weight hemicellulose and 40-90% by weight one or more ethylenically unsaturated monomers in the presence of at least one redox initiator. The ethylenically unsaturated monomers comprise
a) 0-60% by weight at least one substituted or unsubstituted styrene,
b) 10-100% by weight at least one alkyl (meth)acrylate, and/or 10-100% by weight at least one alkyl acrylate, and
c) 0-10% by weight at least one further ethylenically unsaturated co-polymerizable monomer.

Sum of a) + b) + c) of the ethylenically unsaturated monomers is 100%. Since the reaction mixture comprises also 40-90% by weight one or more ethylenically unsaturated monomers and 10-60 % by weight d) hemicellulose, sum of a) + b) + c) + d) in the reaction mixture is 100%.

A particular ethylenically unsaturated monomer of group a) is unsubstituted styrene. Also substituted styrenes which undergo free radical polymerization reactions can be used. Exemplary substituted styrenes are α-methylstyrene, *ortho-, meta-* and para-methylstyrene, *ortho-, meta-* and para ethylstyrene, o,p-dimethylstyrene, *o,p-*diethylstyrene, isopropylstyrene, o-methyl-p-isopropylstyrene, p-chlorostyrene, p-bromostyrene, o,p-dichlorostyrene, and o,p-dibromostyrene.

Exemplary alkyl (meth)acrylates of group b) are esters of methacrylic acid which are derived from monohydric C2- to C12-alcohols, such as ethyl methacrylate, n-propyl methacrylate, isopropyl methacrylate, n-butyl methacrylate, isobutyl methacrylate, tert-butyl methacrylate, sec-butyl methacrylate, n-pentyl methacrylate, neopentyl methacrylate, cyclohexyl methacrylate, 2-hexyl methacrylate, 2-ethylhexyl methacrylate, n-octyl methacrylate, i-octyl methacrylate, decyl methacrylate, and dodecyl methacrylate.

According to a preferable embodiment the alkyl (meth)acrylates of group b) are selected from C1-C4-alkyl (meth)acrylates. Particular C1-C4-alkyl (meth)acrylate is methyl(meth)acrylate.

Exemplary alkyl acrylates of group b) are esters of acrylic acid which are derived from monohydric C2- to C12-alcohols, such as ethyl acrylate, *n-*propyl acrylate, isopropyl acrylate, *n*-butyl acrylate, isobutyl acrylate, *tert*-butyl acrylate, *sec*-butyl acrylate, *n*-pentyl acrylate, neopentyl acrylate, cyclohexyl acrylate, 2-hexyl acrylate, 2-ethylhexyl acrylate, *n*-octyl acrylate, *i*-octyl acrylate, decyl acrylate, and dodecyl acrylate.

According to a preferable embodiment the alkyl acrylates of group b) are selected from C1-C4-alkyl acrylates. A particular C1-C4-alkyl acrylate is n-butyl acrylate.

Examples of monomers of group c) are stearyl acrylate, stearyl methacrylate, palmityl acrylate, behenyl acrylate, behenyl methacrylate, vinyl acetate, vinyl propionate, hydroxyethyl acrylate, hydroxyethyl methacrylate, N-vinylformamide, acrylamide, methacrylamide, N-vinylpyrrolidone, N-vinylimidazole, N-vinylcaprolactam, acrylic acid, methacrylic acid, acrylamidomethylpropane- sulfonic acid, vinylsulfonic acid, styrenesulfonic acid and salts of the monomers comprising acid groups. The acidic monomers may be used in partly or completely neutralized form. Neutralizing agents used are, for example, sodium hydroxide solution, potassium hydroxide solution, sodium carbonate, sodium bicarbonate, calcium hydroxide and ammonia. A particular monomer of group c) is methacrylic acid.

The hemicellulose is preferably selected from xylans and galactoglucomannans (GGM) or their mixtures. According to a particular embodiment the hemicellulose is xylan. According to another particular embodiment the hemicellulose is GGM. Hemicelluloses of different molecular weight ranges can be used. Exemplary molecular weight ranges for xylans are < 5 kDa, 5-10 kDa and > 10 kDa. Exemplary molecular weight ranges for GGMs are < 5 kDa, 5-10 kDa and > 10 kDa.

In order to initiate the free radical polymerization a redox initiator is used. Redox initiators are preferably graft-linking, water-soluble redox systems, for example comprising hydrogen peroxide and a heavy metal salt, such as copper sulfate or comprising hydrogen peroxide and sulfur dioxide or comprising hydrogen peroxide and sodium metabisulfite. Further suitable redox systems are combinations of tert-butyl hydroperoxide and/or sulfur dioxide, sodium or potassium persulfate/sodium bisulfite, ammonium persulfate/sodium bisulfite or ammonium persulfate/iron(II) sulfate. Preferably, hydrogen peroxide is used in combination with a heavy metal salt, such as iron(II) sulfate or copper(II) sulfate. Frequently, the redox system additionally comprises a further reducing agent, such as ascorbic acid, sodium formaldehyde sulfoxylate, sodium disulfite and/or sodium dithionite. A particular redox system is a combination of hydrogen peroxide and copper(II) sulfate.

The polymerization of the monomers (a) to (c) is affected in an aqueous medium in the presence of a hemicellulose. The polymerization can be carried out both by the feed process and by a batch process.

The polymerization is usually carried out in the absence of oxygen, preferably in an inert gas atmosphere, for example under nitrogen. During the polymerization, thorough mixing of the components should be ensured. Thus, the reaction mixture is preferably stirred during the entire duration of the polymerization and of any subsequent post-polymerization.

The polymerization is usually carried out at temperatures of from 30 to 110°C, preferably from 50 to 100°C. An exemplary temperature is 85 °C.

Preferred polymer dispersions are those which are prepared by free radical polymerization of a mixture comprising 40-90% by weight one or more ethylenically unsaturated monomers comprising
a) 0-60% by weight styrene,
b) 10-100% by weight C1-C4-alkyl acrylates and/or 10-100% by weight C1-C4 alkyl (meth)acrylates
c) 0-10% by weight at least one further ethylenically unsaturated co-polymerizable monomer, and
d) 10-60% by weight hemicellulose.

In the mixture the sum of a) + b) + c) + d) is 100%. The mixture comprises also at least one redox initiator.

According to a particular embodiment the mixture comprises 40-90% by weight ethylenically unsaturated monomers and 10-60% by weight hemicellulose and at least one redox initiator, and wherein the ethylenically unsaturated monomers comprise
a) 0-60% by weight styrene,
b) 10-100% by weight C1-C4-alkyl acrylates and/or 10-100% by weight C1-C4 alkyl (meth)acrylates
c) no further ethylenically unsaturated co-polymerizable monomers.

According to this embodiment the mixture comprises also d) 10-60% by weight hemicellulose, and thus the sum of a) + b) + c) + d) is 100%. The mixture comprises also at least one redox initiator. The hemicellulose is preferably selected from xylans and GGMs.

According to another particular embodiment the mixture comprises 40-90% by weight one or more ethylenically unsaturated monomers. The one or more ethylenically unsaturated monomers comprise
a) 0-60% by weight styrene,
b) 10-100% by weight C1-C4-alkyl methacrylates,
c) no further ethylenically unsaturated co-polymerizable monomers.

According to this embodiment the mixture comprises also d) 10-60% by weight hemicellulose. Thus, the sum of a) + b) + c) + d) is 100%. The mixture comprises also at least one redox initiator. The hemicellulose is preferably selected from xylans and GGMs.

A particular mixture comprises 40-90% by weight one or more ethylenically unsaturated monomers, wherein the one or more ethylenically unsaturated monomers comprise 0-60% by weight styrene, 10-100% by weight butyl acrylate, and 10-60% by weight hemicellulose, in which the weight-% sum of styrene, butyl acrylate and hemicellulose is 100%. The hemicellulose is preferably selected from xylan and GGM. An exemplary mixture comprises 37.5% by weight styrene, 37.5 % by weight butyl acrylate and 25% by weight hemicellulose, and at least one redox initiator. Exemplary redox initiators are copper sulfate and hydrogen peroxide.

According to still another particular embodiment the mixture comprises 40-90% by weight one or more ethylenically unsaturated monomers, wherein the one or more ethylenically unsaturated monomers comprise
a) 0-60% by weight styrene,
b) 10-100% by weight C1-C4-alkyl methacrylates and/or 10-100% by weight C1-C4-alkyl methacrylates,
c) 0-10% by weight at least one further ethylenically unsaturated co-polymerizable monomer.

The mixture comprises also d)10-60% by weight hemicellulose, and thus the sum of a) + b) + c) + d) is 100%. The mixture comprises also at least one redox initiator.

A particular mixture comprises 40-90% by weight one or more ethylenically unsaturated monomers, wherein the one or more ethylenically unsaturated monomers comprise 0-60% by weight styrene, 10-60% by weight butyl acrylate, 10-60% by weight methyl methacrylate, 0-10% by weight methacrylic acid, and 10-60% by weight hemicellulose, in which the sum of the above-mentioned reagents is 100%, and at least one redox initiator. The hemicellulose is preferably selected from xylans and GGMs. An exemplary mixture comprises 34.4% by weight styrene, 26.3% by weight butyl acrylate, 11.3% by weight methyl methacrylate, 3% by weight methacrylic acid and 25% by weight hemicellulose, and at least one redox initiator. Exemplary redox initiators are copper sulfate and hydrogen peroxide.

It was surprisingly found that nature of the hemicellulose and its molecular weight has significant effect on properties of the barrier composition prepared. The best WVTR values were obtained using GGM of molecular weight 5-10 kDa, while the best optical properties were obtained using xylan of molecular weight 5-10 kDa.

According to a particular embodiment the present invention concerns a polymer dispersion obtainable by free radical polymerization of 10-60% by weight hemicellulose and 40-90% by weight one or more ethylenically unsaturated monomers in the presence of at least one redox initiator, wherein the ethylenically unsaturated monomers comprise
a) 0-60% by weight at least one substituted or unsubstituted styrene,
b) 10-100% by weight at least one alkyl (meth)acrylate, and/or 10-100% by weight at least one alkyl acrylate, and
c) 0-10% by weight at least one further ethylenically unsaturated co-polymerizable monomer, wherein the sum of a) + b) + c) is 100 %,
and wherein the hemicellulose is selected from xylans and galactoglycomannans and wherein molecular weight of the hemicellulose is 5-10 kDa.

According to one embodiment the hemicellulose is galactomannan. According to another embodiment the hemicellulose is xylan.

A preferable ethylenically unsaturated monomer of group a) is styrene and the at least one ethylenically unsaturated monomer of group b) is preferably selected from C1-C4 alkyl (meth)acrylate and C1-C4-alkyl acrylate. The at least one ethylenically unsaturated monomer of group c) when present, comprises preferably methacrylic acid.

When the composition is used as a water-based barrier composition it typically comprises also one or more additives selected from filler particles, thickeners, lubricants, defoamers, dispersants, surfactants and pH modifiers known in the art.

Exemplary filler particles are selected from the group consisting of bentonite, vermiculite, montmorillonite, montronite, beidellite, smectite, kaoline, kaolinite, halloysite, phyllosilicate, synthetic phyllosilicates, volkonskoite, hectorite, saponite, illite, laponite, sauconite, magadiite, kenyaite, ledikite, sobockite, stevensite, svinfordite, dickite, nacrite, antigorite, chrysotile, pyrophyllite, tetrasilylic mica, sodium teniolite, muscovite, margarite, phlogopite, xanthophyllite, talc, ground mica, platelet silicas, flaked metal, flaked glass, chlorite, and mixtures thereof.

Exemplary surfactants are selected from the group consisting of alkyl sulfonic acids, alkyl sulfonate salts, aryl sulfonic acids, aryl sulfonate salts, alkylaryl sulfonic acids, alkylaryl sulfonate salts, linear alkylbenzene sulfonic acids, linear alkylbenzene sulfonate salts, alkyl α-sulfomethyl esters, alkyl α-sulfomethyl acids, alkyl α- sulfomethyl acid salts, αolefin sulfonic acids, αolefin sulfonate salts, alcohol ether sulfate salts, alkyl sulfate salts, alkyl ether sulfate salts, aryl ether sulfonate salts, alkyl-sulfosuccinate salts, dialkylsulfo-succinate salts, alkyl polyglucosides, alkyl ethoxylated alcohols, alkyl propoxylated alcohols, alkyl ethoxylated propoxylated alcohols, aryl ethoxylated alcohols, aryl propoxylated alcohols, arylethoxylatedpropox-ylated alcohols, ethyleneoxide-propyleneoxide block copolymers, sorbitan, sorbitan esters, alkanols, alkyl betaines, alkylamido betaines, alkylamidoalkyl betaines and alkyl amphoacetates.

Exemplary lubricants are selected from the group consisting of natural or synthetic hydrocarbon products, stearates or waxes.

Exemplary defoamers are selected from the group consisting of surface-active agents such as high-molecular-weight polydimethylsiloxanes.

Exemplary dispersants are selected from the group consisting of latex, starch, surfactants and polyvinyl alcohol.

Exemplary pH modifiers are selected from the group consisting of ammonia, sodium hydroxide, potassium hydroxide, citric acid and other commonly known acids and bases.

According to another embodiment the present invention concerns a method for coating a paper product comprising the following steps:
i) applying a polymer dispersion obtainable by free radical a polymer dispersion obtainable by free radical polymerization of 10-60% by weight hemicellulose and 40-90% by weight one or more ethylenically unsaturated monomers in the presence of at least one redox initiator, wherein the ethylenically unsaturated monomers comprise
   a) 0-60% by weight at least one substituted or unsubstituted styrene,
   b) 10-100% by weight at least one alkyl (meth)acrylate, and/or 10-100% by weight at least one alkyl acrylate, and
   c) 0-10% by weight at least one further ethylenically unsaturated co-polymerizable monomer, wherein the sum of a) + b) + c) is 100 %
   on a paper product and
ii) drying the dispersion.

Exemplary paper products are paper and paperboard.

Typically, the composition comprises also one or more additives selected from filler particles, thickeners, lubricants, defoamers, dispersants, surfactants, and pH modifiers.

According to still another embodiment the present invention concerns a coated paper product obtainable by a method comprising the following steps:
i) applying a polymer dispersion obtainable by free radical polymerization of 10-60% by weight hemicellulose and 40-90% by weight one or more ethylenically unsaturated monomers in the presence of at least one redox initiator, wherein the ethylenically unsaturated monomers comprise
   a) 0-60% by weight at least one substituted or unsubstituted styrene,
   b) 10-100% by weight at least one alkyl (meth)acrylate, and/or 10-100% by weight at least one alkyl acrylate, and
   c) 0-10% by weight at least one further ethylenically unsaturated co-polymerizable monomer, wherein the sum of a) + b) + c) is 100 % on a paper product and
ii) drying the polymer dispersion.

Exemplary coated paper products are coated paper and coated paperboard.

According to still another embodiment the present invention concerns use of a polymer dispersion obtainable by free radical polymerization of 10-60% by weight hemicellulose and 40-90% by weight one or more ethylenically unsaturated monomers in the presence of at least one redox initiator, wherein the ethylenically unsaturated monomers comprise
a) 0-60% by weight at least one substituted or unsubstituted styrene,
b) 10-100% by weight at least one alkyl (meth)acrylate, and/or 10-100% by weight at least one alkyl acrylate, and
c) 0-10% by weight at least one further ethylenically unsaturated co-polymerizable monomer, wherein the sum of a) + b) + c) is 100 %
as a coating of a paper product or as a size of a paper product.

### EXPERIMENTAL

### Test methods

Liquid water resistance of a substrate comprising barrier formulations were tested with the Cobb method, described by ISO 535:2014, Paper and Board, Determination of water absorptiveness, test time was either 60 s or 900 s. This method determines the amount of liquid water absorbed by paper or paper board in a specific time under standardized conditions. Water vapor transmission rates (WVTR) of the samples were measured with Mocon Permatran-W1A measuring instrument according to method TAPPI T523 - Dynamic Measurement of Water Vapor Transfer Through Sheet Materials at conditions on 23 °C and 50 % RH.

Analyses for board substrate were grammage, PPS surface roughness (Parker Print Surface), Bendtsen roughness, Gurley air permeability, water absorbency Cobb 60 s and Gurley oil absorption. Analyses for barrier dispersion coated boards were grammage, Coat weight, pinholes, KIT oil absorption, WVTR, mineral oil penetration rate (HVTR), grease resistance, blocking, optical properties, water absorbency Cobb 900 s, creasability, heat sealability and blocking. In creasability test dispersion coated board sheets were creased with a Morgan Electro Creaser so that test tray could be formed. Trays were placed on light table and filled with vegetable oil and the time when oil had penetrated through all the creases was recorded. Additionally, photographs of the trays were taken during the analysis at certain time intervals for visual characterization and comparison of the test specimen.

Uniformity of barrier dispersion coatings on paper and board bases was evaluated with pinhole test. In the test method methylene blue dye containing ethanol (pinhole solution) is spread with a brush on the specimen and then excess pinhole solution is wiped away. Afterwards the sample is visually characterized whether there are blue spots on the backside of the sample indicating pinholes or if the sample is pinhole free and spotless. The samples are rated on a scale to 0 with no pinholes to 3 with plenty of pinholes.

Hot air and hot bar heat sealability of barrier dispersion coated boards were tested with a CAF heat sealing machine. In hot air sealing test coated side of the material was heated under air flow of 200 l/min at a given temperature for 0.5 seconds. Heated side of the sample was then pressed against an unheated backside of the material for one second at pressure of 4 bars. In hot bar sealing test, the temperature of a lower sealing bar was 45 °C and the temperature of the upper sealing bar was adjusted. Samples were placed between the bars coating against coating and bars were clamped for 1 second with a pressure of 4 bars.

Testing methods for barrier coated board are described more detailed by P.Miet-tinen et al. (The role of base substrate on barrier and convertibility properties of Water Based Barrier Coated (WBBC) paper and paperboard. Papercon 2017*).* HVTR (mineral oil migration ) was tested as presented by R. Gaudreault (Advances in Pulp and paper Research, 15th Fundamental Research Symposium. Cambridge, vol 2, pp. 907-925*.)*

Properties of paper board base used in the tests have been collected in table 1.

**Table 1. properties of the paperboard used in the tests**

| | |
|---|---|
| Grammage | 214 gsm |
| PPS10 ts | 3 µm |
| PPS10 bs | 1 µm |
| Bendtsen roughness ts | 60 ml/min |
| Bendtsen roughness bs | 27 ml/min |
| Gurley air permeability | 8260 s |
| Cobb 60 ts | 21 gsm |
| Unger₁₀ oil absorption ts | 2.5 gsm |

Xylans and galactoglucomannans were isolated and purified as disclosed in WO2017/168051.

### Preparation of Water Based Barrier Formulations (WBBF)

### Process A

An admixture comprising of 25% by dry weight of aqueous hemicellulose solution (GGM or xylan) and monomers of 37.5 % by weight styrene and 37.5 % by weight butyl acrylate was prepared in a 1-liter pre-heated (85°C) glass reactor. Polymerization was initiated by a copper sulfate solution (0.03 pph by weight of the total monomers) and hydrogen peroxide solution (2 pph by weight of the total monomers). Monomer and initiator feed were added over a period of 4 to 4.5 hours to the reactor under continuous mixing at 85°C under a nitrogen atmosphere. Following the polymerization pH was adjusted with solution of ammonia (0.1 pph by weight of the total monomers) at the temperature of 45°C. Finally, at room temperature, the dispersion was filtered with 90 µm filter cloth.

### Process B

An admixture comprising of 25 % by dry weight of aqueous hemicellulose (GGM or xylan) solution and monomers of 34.4 % by weight styrene, 26.3 % by weight butyl acrylate, 11.3 % by methyl methacrylate and 3 % by weight methacrylic acid was prepared in a 1-liter pre-heated (85°C) glass reactor. Polymerization was initiated by a copper sulfate solution (0.03 pph by weight of the total monomers) and hydrogen peroxide solution (2 pph by weight of the total monomers). Monomer and initiator feed were added over a period of 4 to 4.5 hours to the reactor under continuous mixing at 85°C under a nitrogen atmosphere. Following the polymerization pH was adjusted with solution of ammonia (0.2 pph by weight of the total monomers) at the temperature of 45°C. Finally, at room temperature, the dispersion was filtered with 90 µm filter cloth.

Both processes were performed by using GGM and xylan of different molecular weights.

### Comparative examples

Process A and B were performed as disclosed above but by using starch (MW > 10 kDa) instead of hemicellulose.

Water based barrier formulations prepared are collected in table 2.

**Table 2. Water based barrier formulations (WBBF) prepared**

| **carbohydrate** | **WBBF** | **Process** | **MW (carbohydrate staring material)** |
|---|---|---|---|
| Starch | 1a | A | > 10 kDa |
| GGM | 2a | A | < 5 kDa |
| GGM | 3a | A | 5-10 kDa |
| GGM | 4a | A | >10 kDa |
| Xylan | 5a | A | 5-10 kDa |
| Xylan | 6a | A | >10 kDa |
| Starch | 1b | B | > 10 kDa |
| Xylan | 5b | B | 5kDa-10 kDa |
| Xylan | 6b | B | >10 kDa |

### Preparation of Water Based Barrier Coating (WBBC) compositions

A WBBC composition is a dispersion of fine particles dispersed in water phase with a solids content from 20% to 70% by weight. The Water Based Barrier Coating composition can include one or more additives such as filler pigments, thickeners, lubricants, defoamers, dispersants, surfactants and pH modifiers. Exemplary barrier composition prepared consisted 60 parts per hundred dry weight of the WBBFs of table 2 and 40 parts per hundred dry weight of filler pigment. The WBBCs based on starch derivative and hemicellulose derivate formulations were applied at coat weight between 12-14 gsm.

Properties of the WBBC compositions prepared are listed in tables 3 and 4.

**Table 3 Properties of barrier compositions comprising WBBFs prepared by process A.**

| WBBF | 1a | 2a | 3a | 4a | 5a | 6a |
|---|---|---|---|---|---|---|
| carbohydrate | starch | GGM | GGM | GGM | xylan | xylan |
| MW (kDa) | >10 | < 5 | 5-10 | > 10 | 5-10 | > 10 |
| WVTR (gm⁻² d⁻¹) | 42 | 33 | 10 | 49 | 33 | 63 |
| HVTR (gm⁻²d⁻¹) | 438 | 866 | 130 | 189 | 280 | 171 |
| Cobb 900 (g/m⁻²) | 72 | 60 | 70 | 72 | 76 | 78 |
| CIE Whiteness | 91 | 94 | 92 | 92 | 92 | 96 |
| UV Brightness | 36 | 76 | 35 | 35 | 64 | 104 |
| L* D65 D65/10 | 68 | 83 | 77 | 77 | 88 | 93 |
| ISO Brightness R457C | 65 | 79 | 73 | 74 | 74 | 87 |
| Fluorescence R357 D65 | 6 | 8 | 7 | 6 | 6 | 13 |
| pin holes | 0 | 0 | 0 | 0 | 0 | 0 |
| oil resistance | >150 | 150 | >150 | >150 | >150 | >150 |

**Table 4 Properties of barrier compositions comprising WBBFs prepared by process B.**

| WBBF | 1b | 5b | 6b |
|---|---|---|---|
| carbohydrate | starch | xylan | xylan |
| MW (kDa) | > 10 | 5-10 | > 10 |
| WVTR (gm⁻² d⁻¹) | 43 | 52 | 53 |
| Cobb 900 (g/m⁻²) | 71 | 68 | 65 |
| HVTR (gm⁻²d⁻¹) | 244 | 280 | 177 |
| CIE Whiteness | 93 | 94 | 95 |
| UV Brightness | 73 | 100 | 86 |
| L* D65 D65/10 | 81 | 89 | 86 |
| ISO Brightness R457C | 77 | 84 | 81 |
| Fluorescence R357 D65 | 9 | 13 | 8 |
| pin holes | 0 | 0 | 0 |

The results can be summarized as follows
o Measured properties of WBBC of the present invention are in the same order of magnitude or better than properties of the corresponding starch derivatives. Accordingly, the edible starch can be replaced by hemicellulose in barrier compositions.
o Enhanced water and oil retardation can be obtained by choosing GGM of molecular weight between 5-10 kDa as the hemicellulose. The WVTR is close to that of PE coated paperboard.
∘ The best optical properties could be achieved by choosing xylan as the hemicellulose derivative.

## Claims

1. A polymer dispersion obtainable by free radical polymerization of 10-60% by weight hemicellulose and 40-90% by weight one or more ethylenically unsaturated monomers in the presence of at least one redox initiator, the ethylenically unsaturated monomers comprising
a) 0-60% by weight at least one substituted or unsubstituted styrene,
b) 10-100% by weight at least one alkyl (meth)acrylate, and/or 10-100% by weight at least one alkyl acrylate, and
c) 0-10% by weight at least one further ethylenically unsaturated co-polymerizable monomer,
wherein the sum of a) + b) + c) is 100 % **characterized in that** molecular weight of the hemicellulose is 5-10 kDa and the hemicellulose is selected from xylans and galactoglycomannans.

2. The polymer dispersion according to claim 1 wherein the ethylenically unsaturated monomer of group a) is styrene.

3. The polymer dispersion according to claim 1 or 2 wherein the at least one ethylenically unsaturated monomer of group b) is selected from C1-C4 alkyl (meth)acrylate and C1-C4-alkyl acrylate.

4. The polymer dispersion according to any one of claims 1-3 wherein the at least one further ethylenically unsaturated co-polymerizable monomer of group c) comprises methacrylic acid.

5. The composition according any one of claims 1-4 wherein the hemicellulose is galactomannan.

6. The composition according to any one of claims 1-4, wherein the hemicellulose is xylan.

7. The polymer dispersion according to any one of claims 1-6 wherein the redox initiator comprises a combination of copper(II) sulfate and hydrogen peroxide.

8. The polymer dispersion according to any one of claims 1-7 wherein the ethylenically unsaturated monomer of group b) comprises butyl acrylate.

9. The polymer dispersion according to any one of claims 1-8 wherein the ethylenically unsaturated monomers of group b) comprises butyl acrylate and methyl methacrylate and wherein the ethylenically unsaturated co-polymerizable monomers of group c) comprises methacrylic acid.

10. The polymer dispersion according to any one of claims 1-9 further comprising one or more additives selected from filler pigments, thickeners, lubricants, defoamers, dispersants, surfactants, and pH modifiers.

11. A method for coating a paper product comprising
i) applying the polymer dispersion according to any of claims 1-9 on the paper product, and
ii) drying the polymer dispersion.

12. A coated paper product obtainable by the method according to claim 11.

13. Use of the polymer dispersion according to any of claims 1-9 as a size of paper product or as a coating of a paper product.

## Patentansprüche

1. Polymerdispersion, die durch Radikalpolymerisation von 10-60 Gew.-% Hemicellulose und 40-90 Gew.-% eines oder mehrerer ethylenisch ungesättigter Monomere in Gegenwart mindestens eines Redoxinitiators erhältlich ist, wobei die ethylenisch ungesättigten Monomere Folgendes umfassen
a) 0-60 Gew.-% mindestens eines substituierten oder unsubstituierten Styrols,
b) 10-100 Gew.-% mindestens eines Alkyl(meth)acrylats und/oder 10-100 Gew.-% mindestens eines Alkylacrylats und
c) 0-10 Gew.-% mindestens eines weiteren ethylenisch ungesättigten copolymerisierbaren Monomers,
wobei die Summe von a) + b) + c) 100 % beträgt, **dadurch gekennzeichnet, dass** das Molekulargewicht der Hemicellulose 5-10 kDa beträgt und die Hemicellulose unter Xylanen und Galactoglucomannanen ausgewählt wird.

2. Polymerdispersion nach Anspruch 1, wobei das ethylenisch ungesättigte Monomer der Gruppe a) Styrol ist.

3. Polymerdispersion nach Anspruch 1 oder 2, wobei das mindestens eine ethylenisch ungesättigte Monomer der Gruppe b) von C1-C4-Alkyl(meth)acrylat und C1-C4-Alkylacrylat ausgewählt wird.

4. Polymerdispersion nach einem der Ansprüche 1-3, wobei das mindestens eine weitere ethylenisch ungesättigte copolymerisierbare Monomer der Gruppe c) Methacrylsäure umfasst.

5. Zusammensetzung nach einem der Ansprüche 1-4, wobei die Hemicellulose Galactomannan ist.

6. Zusammensetzung nach einem der Ansprüche 1-4, wobei die Hemicellulose Xylan ist.

7. Polymerdispersion nach einem der Ansprüche 1-6, wobei der Redoxinitiator eine Kombination von Kupfer(II)sulfat und Wasserstoffperoxid umfasst.

8. Polymerdispersion nach einem der Ansprüche 1-7, wobei das ethylenisch ungesättigte Monomer der Gruppe b) Butylacrylat umfasst.

9. Polymerdispersion nach einem der Ansprüche 1-8, wobei die ethylenisch ungesättigten Monomere der Gruppe b) Butylacrylat und Methylmethacrylat umfassen und wobei die ethylenisch ungesättigten copolymerisierbaren Monomere der Gruppe c) Methacrylsäure umfassen.

10. Polymerdispersion nach einem der Ansprüche 1-9, ferner ein oder mehrere Zusatzmittel umfassend ausgewählt unter Füllstoffpigmenten, Verdickungsmitteln, Gleitmitteln, Entschäumern, Dispergiermitteln, Tensiden und pH-Modifiziermitteln.

11. Verfahren zum Beschichten eines Papierprodukts, umfassend
i) Auftragen der Polymerdispersion nach einem der Ansprüche 1-9 auf das Papierprodukt und
ii) Trocknen der Polymerdispersion.

12. Beschichtetes Papierprodukt, das durch das Verfahren nach Anspruch 11 erhältlich ist.

13. Verwendung der Polymerdispersion nach einem der Ansprüche 1-9 als Schlichte für Papierprodukt oder als Beschichtung eines Papierprodukts.

## Revendications

1. Dispersion de polymère obtenue par polymérisation radicalaire de 10 à 60 % en poids d'hémicellulose et de 40 à 90 % en poids d'un ou de plusieurs monomères éthyléniquement insaturés en présence d'au moins un initiateur redox, les monomères éthyléniquement insaturés comprenant
a) de 0 à 60 % en poids d'au moins un styrène substitué ou non substitué,
b) de 10 à 100 % en poids d'au moins un (méth)acrylate d'alkyle, et/ou de 10 à 100 % en poids d'au moins un acrylate d'alkyle, et
c) de 0 à 10 % en poids d'au moins un autre monomère copolymérisable éthyléniquement insaturé,
dans lequel la somme de a) + b) + c) est égale à 100 % **caractérisé en ce que** le poids moléculaire de l'hémicellulose est compris entre 5 et 10 kDa et que l'hémicellulose est choisie parmi les xylanes et les galactoglycomannanes.

2. Dispersion polymère selon la revendication 1, dans laquelle le monomère éthyléniquement insaturé du groupe a) est le styrène.

3. Dispersion polymère selon la revendication 1 ou la revendication 2, dans laquelle au moins un monomère éthyléniquement insaturé du groupe b) est choisi parmi le (méth)acrylate d'alkyle en C1-C4 et l'acrylate d'alkyle en C1-C4.

4. Dispersion polymère selon l'une quelconque des revendications 1 à 3, dans laquelle au moins un autre monomère copolymérisable à insaturation éthylénique du groupe c) comprend l'acide méthacrylique.

5. Composition selon l'une quelconque des revendications 1 à 4, dans laquelle l'hémicellulose est le galactomannane.

6. Composition selon l'une quelconque des revendications 1 à 4, dans laquelle l'hémicellulose est le xylane.

7. Dispersion de polymère selon l'une quelconque des revendications 1 à 6, dans laquelle l'initiateur redox comprend une combinaison de sulfate de cuivre (II) et de peroxyde d'hydrogène.

8. Dispersion de polymère selon l'une quelconque des revendications 1 à 7, dans laquelle le monomère éthyléniquement insaturé du groupe b) comprend l'acrylate de butyle.

9. Dispersion de polymère selon l'une quelconque des revendications 1 à 8, dans laquelle les monomères à insaturation éthylénique du groupe b) comprennent l'acrylate de butyle et le méthacrylate de méthyle et dans laquelle les monomères copolymérisables éthyléniquement insaturés du groupe c) comprennent l'acide méthacrylique.

10. Dispersion de polymère selon l'une quelconque des revendications 1 à 9, comprenant en outre un ou plusieurs additifs choisis parmi les pigments de charge, les épaississants, les lubrifiants, les antimousses, les dispersants, les tensioactifs et les modificateurs de pH.

11. Procédé de revêtement d'un produit de papier comprenant
i) l'application de la dispersion de polymère selon l'une quelconque des revendications 1 à 9 sur le produit en papier, et
ii) le séchage de la dispersion de polymère.

12. Produit en papier couché obtenu par le procédé selon la revendication 11.

13. Utilisation de la dispersion de polymère selon l'une quelconque des revendications 1 à 9 en tant que format de produit de papier ou en tant que revêtement d'un produit de papier.
